# EUROPÄISCHE PATENTSCHRIFT

(11) **EP 3 140 141 B1**
(45) Veröffentlichungstag und Bekanntmachung des Hinweises auf die Patenterteilung: **18.03.2020**
(21) Anmeldenummer: 15715246.3
(22) Anmeldetag: 09.04.2015
(51) Int. Cl.: B60K 6/365, B60K 6/387, B60K 6/547, F16H 63/30, F16H 3/44

(54) **ANORDNUNG, ENTHALTEND EINEN PLANETENRADSATZ UND EINE VORRICHTUNG ZUM SCHALTEN EINES ERSTEN UND ZWEITEN SCHALTELEMENTS, UND GETRIEBE MIT EINER SOLCHEN ANORDNUNG**
ARRANGEMENT COMPRISING A PLANETARY GEAR SET AND A DEVICE FOR SWITCHING A FIRST AND SECOND SWITCHING ELEMENT, AND TRANSMISSION COMPRISING SUCH AN ARRANGEMENT
AGENCEMENT COMPRENANT UN TRAIN ÉPICYCLOÏDAL ET UN DISPOSITIF DE SÉLECTION D'UN PREMIER ET D'UN DEUXIÈME ÉLÉMENT, ET BOÎTE DE VITESSE COMPRENANT UN TEL AGENCEMENT

(30) Priorität: 09.05.2014 DE 102014208794
(43) Veröffentlichungstag der Anmeldung: 15.03.2017
(73) Patentinhaber: ZF Friedrichshafen AG, 88046 Friedrichshafen (DE)
(72) Erfinder: ZIEMER, Peter, 88069 Tettnang (DE)
(86) Internationale Anmeldenummer: PCT/EP2015/057652
(87) Internationale Veröffentlichungsnummer: WO 2015/169524

(56) Entgegenhaltungen:
- DE-A1-102004 024 866
- DE-C- 364 373
- US-A- 1 050 522
- US-A1- 2008 176 695

## Beschreibung

Die Erfindung betrifft eine Anordnung, enthaltend einen Planetenradsatz und eine Vorrichtung zum Schalten eines ersten und zweiten Schaltelements, wobei durch das erste Schaltelement eine drehfeste formschlüssige Verbindung zwischen einem ersten Element und einem zweiten Element herstellbar ist, und wobei durch das zweite Schaltelement eine drehfeste formschlüssige Verbindung zwischen dem zweiten Element und einem dritten Element herstellbar ist, wobei die Betätigung des ersten Schaltelements und des zweiten Schaltelements durch Längsverschiebung eines gemeinsamen Betätigungselements erfolgt, wobei in einem ersten Schaltzustand das erste Schaltelement geschlossen ist und das zweite Schaltelement geöffnet ist, wobei in einem zweiten Schaltzustand das erste Schaltelement geöffnet ist und das zweite Schaltelement geschlossen ist, sowie ein Getriebe für ein Kraftfahrzeug mit einer solchen Vorrichtung.

Derartige Vorrichtungen werden insbesondere in Kraftfahrzeuggetrieben verwendet, um auf einer Welle drehbar gelagerte Stirnräder mit der Welle drehfest zu verbinden. Beispielsweise ist aus der Patentanmeldung DE 10 2005 038 681 A1 eine Schaltanordnung zum Verschieben einer Schaltgabel eines mehrstufigen Schaltgetriebezusammenbaus entlang einer Schaltstange bekannt. Darin sind auf einer Welle ein erstes Gangrad und ein zweites Gangrad frei drehbar angeordnet. Eine mit einer umfänglichen Nut ausgestattete Schaltmuffe ist axial verschiebbar auf der Welle angeordnet. Sie ist mit einer Innenverzahnung versehen, die mit einer Außenverzahnung der Welle kämmt. Nasen einer Schaltgabel greifen in die Nut der Schaltmuffe ein, so dass letztere axial verschoben werden kann und die Innenverzahnung der Schaltmuffe wahlweise mit einer Außenverzahnung eines der benachbarten Gangräder in Eingriff gebracht werden kann.

Eine derartige Anordnung ist insbesondere bei dem oben beschrieben Aufbau vorteilhaft, da bei derartigen Stirnradgetrieben die Schaltmuffen für die Schaltgabel gut zugänglich sind.

Getriebe mit einem oder gar mehreren miteinander gekoppelten Planetenradsätzen hingegen weisen eine deutlich schlechtere Zugänglichkeit zu den Schaltelementen auf. Häufig sind aufwändige Differenzdrehzahl-Überbrückungen mechanischer oder hydraulischer Art erforderlich, um die Schaltelemente solcher Getriebe zu betätigen. Dadurch werden die Komplexität und die Fehleranfälligkeit des Getriebes erhöht. Die Patentschrift US 1,050,522 beschreibt ein Gangwechselgetriebe in Vorgelegebauweise mit mehreren Wellen und mehreren Zahnrädern auf diesen Wellen. Benachbarte Zahnräder sind axial verschiebbar, um diese miteinander in Eingriff zu bringen.

Es ist daher Aufgabe der Erfindung eine Vorrichtung zum Schalten zweier Schaltelemente bereitzustellen, welche auch bei einer erschwerten Zugänglichkeit eine zuverlässige und einfache Betätigung der beiden Schaltelemente ermöglicht.

Diese Aufgabe wird erfindungsgemäß durch die Merkmale des Patentanspruchs 1, in welchem drei alternative Ausführungsformen der Erfindung beansprucht werden, gelöst, wobei sich vorteilhafte Ausgestaltungen aus den Unteransprüchen, der Beschreibung und den Zeichnungen ergeben.

Durch ein erstes Schaltelement ist eine drehfeste formschlüssige Verbindung zwischen einem ersten Element und einem zweiten Element herstellbar. Durch ein zweites Schaltelement ist eine drehfeste formschlüssige Verbindung zwischen dem zweiten Element und einem dritten Element herstellbar. Die Betätigung beider Schaltelemente erfolgt durch ein gemeinsames Betätigungselement.

Durch Längsverschiebung des gemeinsamen Betätigungselements in einer ersten Verschieberichtung wird ein erster Schaltzustand hergestellt. In diesem ersten Schaltzustand ist das erste Schaltelement geschlossen und das zweite Schaltelement geöffnet, sodass eine drehfeste formschlüssige Verbindung zwischen dem ersten Element und dem zweiten Element besteht. Durch Längsverschiebung des gemeinsamen Betätigungselements in eine zweite, der ersten Verschieberichtung entgegengesetzten Verschieberichtung wird ein zweiter Schaltzustand hergestellt. In diesem zweiten Schaltzustand ist das erste Schaltelement geöffnet und das zweite Schaltelement geschlossen, sodass eine drehfeste formschlüssige Verbindung zwischen dem zweiten Element und dem dritten Element besteht.

Erfindungsgemäß sind das erste und dritte Element miteinander gekoppelt, sodass eine Verschiebung des ersten Elements durch das gemeinsame Betätigungselement zu einer gleichgerichteten Verschiebung des dritten Elements führt, und umgekehrt. Das zweite Element ist in beiden Verschieberichtungen lagefixiert. Dementsprechend wird bei einem Schaltvorgang zwischen den zwei Schaltzuständen nicht das zweite Element verschoben, welches sowohl dem ersten als auch dem zweiten Schaltelement zugeordnet ist. Stattdessen werden das erste und das dritte Element zusammen verschoben. Dies führt zu einer wesentlichen Vereinfachung der Betätigung des ersten und zweiten Schaltelements, wie an nachfolgend dargestellten Beispielen verdeutlicht wird.

Gemäß einer ersten Ausführungsform ist das erste Element drehfest mit einem Steg des Planetenradsatzes verbunden, und das dritte Element ist mit einem Hohlrad oder einem Sonnenrad desselben Planetenradsatzes drehfest verbunden. Das gemeinsame Betätigungselement ist auf einer ersten Seite des Planetenradsatzes angeordnet. Das zweite Element ist auf einer zweiten Seite des Planetenradsatzes angeordnet, welche der ersten Seite gegenüberliegt.

Eine derartige Geometrie kann beispielweise dann vorliegen, wenn sich radial außerhalb und/oder innerhalb des zweiten Elements ein rotierendes Bauelement befindet welches den Zugang zum zweiten Element versperrt. Ein solches rotierendes Bauelement kann beispielsweise durch den Rotor einer elektrischen Maschine oder durch eine an das Planetengetriebe anschließende Welle gebildet sein. In anderen Worten kann eine äußere Zwangsbedingung gegeben sein, welche verhindert dass das zweite Element und das gemeinsame Betätigungselement auf der gleichen Seite des Planetenradsatzes angeordnet werden können.

Da sowohl das erste als auch das dritte Element eine andere Drehzahl als das zweite Element aufweisen können, müssten für eine Verschiebung des zweiten Elements durch das gemeinsame Betätigungselement ausgehend von der ersten Seite des Planetenradsatzes bis zu zwei Differenzdrehzahlen überwunden werden. Durch die gemeinsame Verschiebung des ersten und dritten Elements hingegen ist in einem solchen Fall für jedes dieser Elemente nur eine Differenzdrehzahl zu überwinden. Dies vereinfacht die Komplexität der Schaltvorrichtung und verbessert auch deren Wirkungsweise, indem die Toleranzkette verkürzt wird.

Das erste Element ist vorzugsweise drehfest mit dem Steg des Planetenradsatzes verbunden, jedoch axial verschiebbar ausgeführt. Der Steg selbst ist dabei in axialer Richtung fixiert, beispielsweise durch einen Anschlag. Diese axiale Verschiebbarkeit und gleichzeitige drehfeste Verbindung kann beispielsweise durch eine geeignet ausgebildete Mitnahmeverzahnung zwischen dem ersten Element und dem Steg ausgeführt sein. In gleicher Weise kann das dritte Element axial verschiebbar zum Sonnenrad oder Hohlrad sein. Dadurch sind am Planetenradsatz und an dessen Lageraufbau keine umfangreichen Modifikationen notwendig.

Gemäß einer zweiten Ausführungsform ist das zweite Element mit dem Hohlrad des Planetenradsatzes verbunden, wobei das Hohlrad aus einem ersten Segment und einem zweiten Segment besteht welche nicht unmittelbar miteinander verbunden sind. Die beiden Segmente sind über entsprechend lange Planetenräder miteinander wirkverbunden. Zwischen den Segmenten eines derart geteilten Hohlrads kann eine Welle führen, welche mit dem Steg des Planetenradsatzes verbunden ist. Sind die Wirkdurchmesser der beiden Segmente des Hohlrads ident, so sind die Drehzahlen der beiden Segmente ebenfalls ident, so als ob sie miteinander verbunden wären. In einer Drehzahlbetrachtung können daher beide Segmente als Bestandteil einer einzigen Welle, bzw. eines einziges Elements angesehen werden. Durch das erste Element ist eine drehfeste formschlüssige Verbindung zum ersten Segment des Hohlrads herstellbar, und durch das dritte Element ist eine drehfeste formschlüssige Verbindung zum zweiten Segment des Hohlrad herstellbar. Die Verbindung zu den Hohlradsegmenten muss dabei nicht unmittelbar an den Segmenten ausgebildet sein, sondern kann auch an einer mit den jeweiligen Segmenten verbundenen Welle ausgebildet sein.

Ein derart geteiltes Hohlrad ist nur dann von Nutzen, wenn es nicht permanent drehfest festgesetzt ist. Ist durch eine äußere Zwangsbedingung das erste Element nur zum ersten Segment des Hohlrads oder einer damit verbundenen Welle gut zugänglich, und ist das dritte Element nur zum zweiten Segment des Hohlrads oder einer damit verbundenen Welle gut zugänglich, so müsste bei einer herkömmlichen Betätigung jene Welle überbrückt werden die zwischen den Segmenten angeordnet ist. Eine Differenzdrehzahl-Überbrückung an dieser Stelle ist jedoch aufgrund der hohen Relativgeschwindigkeiten, die zwangsläufig am Durchmesser des Hohlrads auftreten, unvorteilhaft. Durch die gemeinsame Verschiebung des ersten und dritten Elements hingegen wird deren Zugänglichkeit zu den beiden Segmenten zu einem Vorteil, da der Planetenradsatz außen umgangen werden kann. Die Überbrückung der Differenzdrehzahl kann derart auch einfacher an einem Durchmesser erfolgen, an dem die Relativgeschwindigkeiten geringer sind als am Hohlrad. Wenn das erste oder dritte Element drehfest festgesetzt ist, so ist für dieses Element überhaupt keine Differenz-Drehzahl-Überbrückung erforderlich. Dies vereinfacht die Schaltvorrichtung zusätzlich.

Gemäß einer dritten Ausführungsform wird die Erfindung auf ein geteiltes Sonnenrad angewendet, welches ein erstes Segment und ein davon getrenntes zweites Segment aufweist. Dies ist insbesondere dann vorteilhaft, wenn das erste oder dritte Element drehfest festgesetzt ist.

Vorzugsweise wird ein allfälliger Drehzahlunterschied zwischen dem gemeinsamen Betätigungselement und dem ersten, bzw. dem dritten Element durch eine Überbrückungsvorrichtung überwunden. Das gemeinsame Betätigungselement, welches üblicherweise keine Drehzahl aufweist, greift dabei über geeignet ausgebildete Nasen in eine Nut der Überbrückungsvorrichtung ein. Die Überbrückungsvorrichtung selbst rotiert mit der Drehzahl des ihr zugeordneten ersten oder dritten Elements. Durch Verschiebung des gemeinsamen Betätigungselements entlang einer der beiden Verschieberichtungen laufen die Nasen an einer Innenfläche der Nut auf, und verschieben derart die Überbrückungsvorrichtung.

Weicht sowohl die Drehzahl des ersten Elements als auch die Drehzahl des dritten Elements von der Null-Drehzahl des gemeinsamen Betätigungselements ab, so ist vorzugsweise eine erste Überbrückungsvorrichtung in der Wirkverbindung zwischen dem gemeinsamen Betätigungselement und dem ersten Element angeordnet, und eine zweite Überbrückungsvorrichtung ist in der Wirkverbindung zwischen dem gemeinsamen Betätigungselement und dem dritten Element angeordnet. Erste und zweite Überbrückungsvorrichtung sind dabei parallel zueinander angeordnet. Die parallele Anordnung ist dabei nicht geometrisch zu verstehen, sondern in ihrer Wirkungsweise. In anderen Worten ist in der Wirkverbindung zwischen dem gemeinsamen Betätigungselement und jedem des ersten und dritten Elements nur eine Überbrückungsvorrichtung angeordnet. Dies reduziert die Toleranzkette der Schaltvorrichtung.

Vorzugsweise sind die Überbrückungsvorrichtung, bzw. die Überbrückungsvorrichtungen radial innerhalb des Stegs des Planetenradsatzes angeordnet. Kommt die Schaltvorrichtung bei einem Getriebe mit mehreren Planetenradsätzen zum Einsatz, so sollen die Überbrückungsvorrichtung, bzw. die Überbrückungsvorrichtungen radial innerhalb desjenigen Stegs angeordnet sein, welche den geringsten Abstand zu einer zentralen Achse des Getriebes aufweist. In jedem Fall soll jede Überbrückungsvorrichtung so angeordnet sein, dass der Wirkdurchmesser der Nut, welcher der Überbrückungsvorrichtung zugeordnet ist, möglichst klein ist, um die Relativgeschwindigkeit zwischen dem feststehenden Betätigungselement und der rotierenden Nut zu minimieren.

Gemäß einer Ausgestaltung kann die Vorrichtung in einer Mittellage des gemeinsamen Betätigungselements zwischen dem ersten und zweiten Schaltzustand einen dritten Schaltzustand einnehmen, in dem das erste und das zweite Schaltelement geöffnet sind. Dies erhöht die Flexibilität der Schaltvorrichtung.

Die Erfindung betrifft auch ein Getriebe für ein Kraftfahrzeug, welches zumindest eine erfindungsgemäß vorgeschlagene Vorrichtung zum Schalten eines ersten und zweiten Schaltelements aufweist.

Ein Getriebe bezeichnet hier insbesondere ein mehrgängiges Getriebe, bei dem eine vordefinierte Anzahl an Gängen, also festen Übersetzungsverhältnissen zwischen einer Getriebe-Eingangswelle und einer Getriebe-Ausgangswelle, durch Schaltelemente automatisch schaltbar ist. Bei den Schaltelementen handelt es sich hier beispielsweise um Kupplungen oder Bremsen. Derartige Getriebe finden vor allem in Kraftfahrzeugen Anwendung, um das Drehzahl- und Drehmomentabgabevermögen der Antriebseinheit den Fahrwiderständen des Fahrzeugs in geeigneter Weise anzupassen.

Ein solches Getriebe kann beispielsweise einen Radsatz umfassen, welcher zumindest zwei Planetenradsätze mit einer Vielzahl von Wellen aufweist. Zumindest einer ausgewählten Welle des Radsatzes sind dabei ein erstes und ein zweites Schaltelement zugeordnet. Durch das erste Schaltelement wird eine drehfeste formschlüssige Verbindung zu einem Element des Getriebes hergestellt. Durch das zweite Schaltelement wird eine drehfeste formschlüssige Verbindung zu einem weiteren Element des Getriebes hergestellt. In einem ersten Schaltzustand ist das erste Schaltelement geschlossen und das zweite Schaltelement geöffnet, sodass lediglich das erste Schaltelement die drehfeste formschlüssige Verbindung herstellt. In diesem ersten Schaltzustand stellt das zweite Schaltelement keine Verbindung zur ausgewählten Welle des Radsatzes her. In einem zweiten Schaltzustand ist das erste Schaltelement geöffnet, und das zweite Schaltelement ist geschlossen. Zusätzlich kann auch ein dritter Schaltzustand vorgesehen sein, in dem weder das erste noch das zweite Schaltelement geschlossen ist.

Die ausgewählte Welle des Radsatzes ist in axialer Richtung durch eine geeignete Lagerung fixiert. An der ausgewählten Welle des Radsatzes sind eine oder mehrere Mitnahmeverzahnungen ausgebildet. Durch Eingriff komplementärer Mitnahmeverzahnungen mit der Mitnahmeverzahnung an der ausgewählten Welle des Radsatzes wird die formschlüssige drehfeste Verbindung des ersten und zweiten Schaltelements hergestellt. Die komplementären Mitnahmeverzahnungen des ersten und zweiten Schaltelements sind dabei miteinander gekoppelt und axial verschiebbar, sodass bei einer Verschiebung eines gemeinsamen Betätigungselements in einer ersten Verschieberichtung parallel zur Achse der ausgewählten Welle des Radsatzes die Mitnahmeverzahnung des ersten Schaltelements mit der Mitnahmeverzahnung auf der ausgewählten Welle des Radsatzes in Eingriff gebracht wird. Bei einer Verschiebung des gemeinsamen Betätigungselements in einer zur ersten Verschieberichtung entgegengesetzten zweiten Verschieberichtung wird die Mitnahmeverzahnung des zweiten Schaltelements mit der Mitnahmeverzahnung auf der ausgewählten Welle des Radsatzes in Eingriff gebracht.

Unter einer Welle ist nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz beschreibt einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert.

Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Durch Schaltelemente wird, je nach Betätigungszustand, eine Relativbewegung zwischen zwei Bauteilen zugelassen oder eine Verbindung zur Übertragung eines Drehmoments zwischen den zwei Bauteilen hergestellt. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil stillsteht oder in entgegengesetzter Richtung rotiert. Die Schaltelemente sind in der gegenständlichen Erfindung bevorzugt als Klauen-Schaltelemente ausgeführt, welche die Verbindung durch Formschluss herstellen.

Zwei Elemente werden insbesondere dann als miteinander verbunden bezeichnet, wenn zwischen den Elementen eine feste, insbesondere drehfeste Verbindung besteht. Derart verbundene Elemente drehen mit der gleichen Drehzahl. Die verschiedenen Bauteile und Elemente der genannten Erfindung können dabei über eine Welle beziehungsweise über ein geschlossenes Schaltelement oder ein Verbindungselement, aber auch direkt, beispielsweise mittels einer Schweiß-, Press- oder einer sonstigen Verbindung, miteinander verbunden sein.

Zwei Elemente werden im Weiteren als verbindbar bezeichnet, wenn zwischen diesen Elementen eine lösbare drehfeste Verbindung besteht. Wenn die Verbindung besteht, so drehen solche Elemente mit der gleichen Drehzahl.

Ausführungsbeispiele der Erfindung sind nachfolgend anhand der beigefügten Figuren detailliert beschrieben.
- Fig. 1: zeigt schematisch eine erste Ausführungsform der Schaltvorrichtung
- Fig. 2: zeigt schematisch eine zweite Ausführungsform der Schaltvorrichtung.
- Fig. 3: zeigt schematisch eine dritte Ausführungsform der Schaltvorrichtung.
- Fig. 4: zeigt schematisch eine vierte Ausführungsform der Schaltvorrichtung.
- Fig. 5: zeigt eine schematische Ansicht eines Getriebes mit mehreren Schaltvorrichtungen
- Fig. 6: zeigt einen Ausschnitt einer Schnittdarstellung des Getriebes mit mehreren Schaltvorrichtungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

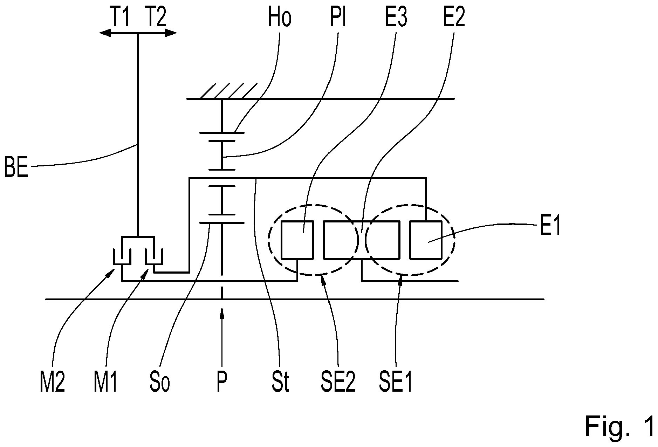

Fig. 1 zeigt schematisch eine erste Ausführungsform der Schaltvorrichtung. Ein Planetenradsatz P umfasst ein Sonnenrad So, einen Steg St, zumindest ein Planetenrad PI und ein Hohlrad Ho. Das Hohlrad Ho ist ständig drehfest festgesetzt. Das Sonnenrad So ist ständig mit einer ersten Welle verbunden. Auf einer ersten Seite des Planetenradsatzes P ist ein Betätigungselement BE angeordnet, welches durch einen nicht dargestellten Aktuator in zwei Richtungen längsverschiebbar ist. Auf einer der ersten Seite des Planetenradsatzes P gegenüberliegenden zweiten Seite befindet sich eine zweite Welle. Die zweite Welle soll wahlweise die Drehzahl des Sonnenrads So, die Drehzahl des Stegs St oder eine freie Drehzahl annehmen.

Auf der zweiten Seite des Planetenradsatzes P sind ein erstes Element E1, ein zweites Element E2 und ein drittes Element E3 angeordnet, welche zusammen ein erstes Schaltelement SE1 und ein zweites Schaltelement SE2 bilden. Die zweite Welle ist durch eine nicht dargestellte Lagerung axial fixiert und ist mit dem zweiten Element E2 ständig verbunden. Das erste Element E1 ist mit dem Steg St drehfest verbunden und zu diesem Steg St axial verschiebbar. In gleicher Weise ist das dritte Element E3 mit dem Sonnenrad So drehfest verbunden und zu diesem Sonnenrad So axial verschiebbar. Der Einfachheit halber ist diese Verschiebbarkeit des ersten und dritten Elements E1, E3 nicht dargestellt.

Durch eine äußere Zwangsbedingung können das Betätigungselement BE und das zweite Element E2 nicht auf der gleichen Seite des Planetenradsatzes P angeordnet werden. Beispielsweise kann radial außerhalb des zweiten Elements E2 eine elektrische Maschine EM angeordnet sein.

In der Wirkverbindung zwischen dem Betätigungselement BE und dem ersten Element E1 ist eine erste Überbrückungsvorrichtung M1 angeordnet. In der Wirkverbindung zwischen dem Betätigungselement BE und dem dritten Element E3 ist eine zweite Überbrückungsvorrichtung M2 angeordnet. Die erste und zweite Überbrückungsvorrichtung weisen je eine nach oben offene Nut auf, in die Nasen des Betätigungselements BE eingreifen. Erste und zweite Überbrückungsvorrichtung M1, M2 sind radial innerhalb des Stegs St des Planetenradsatzes P angeordnet, um die Relativgeschwindigkeit zwischen den Nasen und der Oberfläche der Nut möglichst gering zu halten.

Wird das Betätigungselement BE in eine erste Verschieberichtung T1 verschoben, so laufen die Nasen an einer Innenfläche der Nut auf und verschieben derart das erste und dritte Element E1, E3. Dadurch werden das erste und das dritte Element E1, E3 entlang der ersten Verschieberichtung T1 verschoben, bis sich das erste Element E1 mit dem zweiten Element E2 überdeckt. Dies entspricht einem ersten Schaltzustand S1 der Schaltvorrichtung. Durch eine Ausbildung von geeigneten Mitnahmeverzahnungen am ersten und zweiten Element E1, E2 wird dadurch eine drehfeste formschlüssige Verbindung zwischen dem ersten und zweiten Element E1, E2 hergestellt.

Wird das Betätigungselement BE in eine zur ersten Verschieberichtung T1 entgegengesetzte zweite Verschieberichtung T2 verschoben, so werden das erste und das dritte Element E1, E3 entlang der zweiten Verschieberichtung T2 verschoben, bis sich das dritte Element E3 mit dem zweiten Element E2 überdeckt. Dies entspricht einem zweiten Schaltzustand S2 der Schaltvorrichtung. Durch eine Ausbildung von geeigneten Mitnahmeverzahnungen am zweiten und dritten Element E2, E3 wird dadurch eine drehfeste formschlüssige Verbindung zwischen dem zweiten und dritten Element E2, E3 hergestellt. In einer Mittelstellung des Betätigungselements BE kommt es zu keiner Überdeckung zwischen den Elementen E1, E2, E3, sodass das zweite Element E2 eine freie Drehzahl annehmen kann. In Fig. 1 ist ein derartiger dritter Schaltzustand S3 dargestellt, in dem es zu keiner Überdeckung der Mitnahmeverzahnungen kommt.

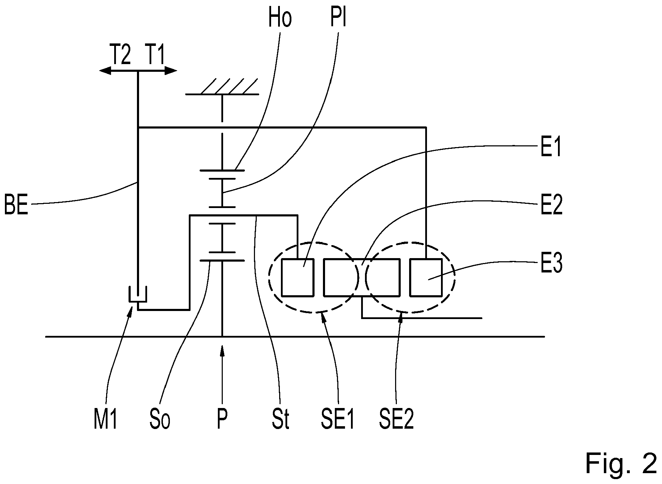

Fig. 2 zeigt schematisch eine zweite Ausführungsform der Schaltvorrichtung. Auf der zweiten Seite des Planetenradsatzes P sind das erste Element E1, das zweite Element E2 und das dritte Element E3 angeordnet, welche zusammen das erste Schaltelement SE1 und das zweite Schaltelement SE2 bilden. In dieser zweiten Ausführungsform soll die zweite Welle wahlweise die Drehzahl des Stegs St annehmen, oder eine freie Drehzahl annehmen, oder drehfest festgesetzt werden. Das erste Element E1 ist dazu mit dem Steg St drehfest verbunden und zu diesem Steg St axial verschiebbar. Das dritte Element E3 ist drehfest mit einem drehfesten Bauteil verbunden, sodass das dritte Element E3 keine Drehzahl außer Null annehmen kann. Die Wirkungsweise der Schaltvorrichtung ist ident zur ersten Ausführungsform. In der Wirkverbindung zwischen dem Betätigungselement BE und dem ersten Element E1 ist eine erste Schaltmuffe M1 angeordnet. In der Wirkverbindung zwischen dem Betätigungselement BE und dem dritten Element E3 besteht keine Differenz-Drehzahl, wodurch eine Schaltmuffe in dieser Wirkverbindung nicht erforderlich ist.

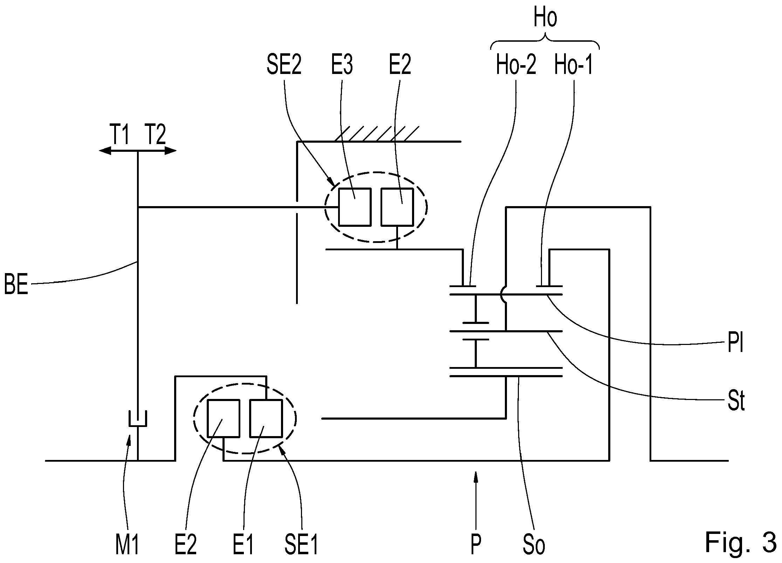

Fig. 3 zeigt schematisch eine dritte Ausführungsform der Schaltvorrichtung. Der Planetenradsatz P weist in dieser dritten Ausführungsform ein geteiltes Hohlrad Ho auf. Das Hohlrad Ho ist dabei in ein erstes Segment Ho-1 und ein zweites Segment Ho-2 aufgeteilt. Zwischen den beiden Segmenten Ho-1 und Ho-2 führt eine Welle zum Steg St des Planetenradsatzes P. Die beiden Segmente Ho-1, Ho-2 weisen den gleichen Wirkdurchmesser auf. Daher kommt es zwischen den beiden Segmenten Ho-1, Ho-2 zu keiner Differenzdrehzahl. In einer Drehzahlbetrachtung können somit beide Segmente Ho-1, Ho-2 als Bestandteil derselben Welle, bzw. desselben Elements angesehen werden, so als ob sie miteinander verbunden wären.

In der dritten Ausführungsform bildet das Hohlrad Ho, bzw. die damit verbundene Welle das zweite Element E2 der Vorrichtung. Über das erste Element E1 ist eine drehfeste formschlüssige Verbindung zu einem Abschnitt der Welle herstellbar, die mit dem ersten Segment Ho-1 verbunden ist. Über das dritte Element E3 ist eine drehfeste formschlüssige Verbindung zu einem Abschnitt der Welle darstellbar, welche mit dem zweiten Segment Ho-2 verbunden ist. Dazu sind zwei räumliche voneinander getrennte Mitnahmeverzahnungen am zweiten Element E2 ausgebildet. Das Hohlrad Ho und die damit verbundene Welle, bzw. Wellenabschnitte sind in axialer Richtung durch eine geeignete, nicht dargestellte Lagerung fixiert.

Das erste Element E1 ist drehfest mit der ersten Welle verbunden und ist axial auf dieser Welle verschiebbar. Das dritte Element E3 ist drehfest mit einem drehfesten Bauteil verbunden, sodass das dritte Element E3 keine Drehzahl außer Null annehmen kann. Das erste und dritte Element E1, E3 sind miteinander gekoppelt, sodass eine Verschiebung des Betätigungselement BE zu einer gleichgerichteten Verschiebung des ersten und dritten Elements E1, E3 führt. In der Wirkverbindung zwischen dem Betätigungselement BE und dem ersten Element E1 ist eine erste Schaltmuffe M1 angeordnet, um den Drehzahlunterschied zwischen dem Betätigungselement BE und dem ersten Element E1 auszugleichen.

Wird das Betätigungselement BE in die erste Verschieberichtung T1 verschoben, so werden das erste und das dritte Element E1, E3 entlang der ersten Verschieberichtung T1 verschoben, bis sich das erste Element E1 mit jener Mitnahmeverzahnung am zweiten Element E2 überdeckt, welche mit dem ersten Segment Ho-1 des Hohlrads Ho verbunden ist. Dadurch wird eine drehfeste formschlüssige Verbindung zwischen dem ersten und zweiten Element E1, E2 hergestellt. Das erste und zweite Element E1, E2 bilden zusammen das erste Schaltelement SE1.

Wird das Betätigungselement BE in die zweite Verschieberichtung T2 verschoben, so werden das erste und das dritte Element E1, E3 entlang der zweiten Verschieberichtung T2 verschoben, bis sich das dritte Element E3 mit jener Mitnahmeverzahnung am zweiten Element E2 überdeckt, welche mit dem zweiten Segment Ho-2 des Hohlrads Ho verbunden ist. Dadurch wird eine drehfeste formschlüssige Verbindung zwischen dem zweiten und dritten Element E2, E3 hergestellt. Das zweite und dritte Element E2, E3 bilden zusammen das zweite Schaltelement SE2.

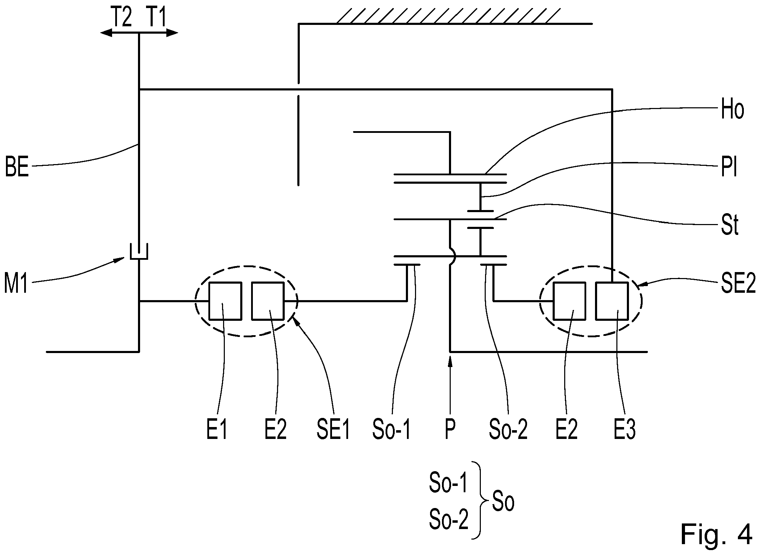

Fig. 4 zeigt schematisch eine vierte Ausführungsform der Schaltvorrichtung. Der Planetenradsatz P weist in dieser vierten Ausführungsform ein geteiltes Sonnenrad So auf. Das Sonnenrad So ist dabei in ein erstes Segment So-1 und ein zweites Segment So-2 aufgeteilt. Zwischen den beiden Segmenten So-1 und So-2 führt eine Welle zum Steg St des Planetenradsatzes P. Die beiden Segmente So-1, So-2 weisen den gleichen Wirkdurchmesser auf. Daher kommt es zwischen den beiden Segmenten So-1, So-2 zu keiner Differenzdrehzahl. In einer Drehzahlbetrachtung können somit beide Segmente So-1, So-2 als Bestandteil derselben Welle, bzw. desselben Elements angesehen werden, so als ob sie miteinander verbunden wären. Die übrige Wirkungsweise ist ident zur dritten Ausführungsform.

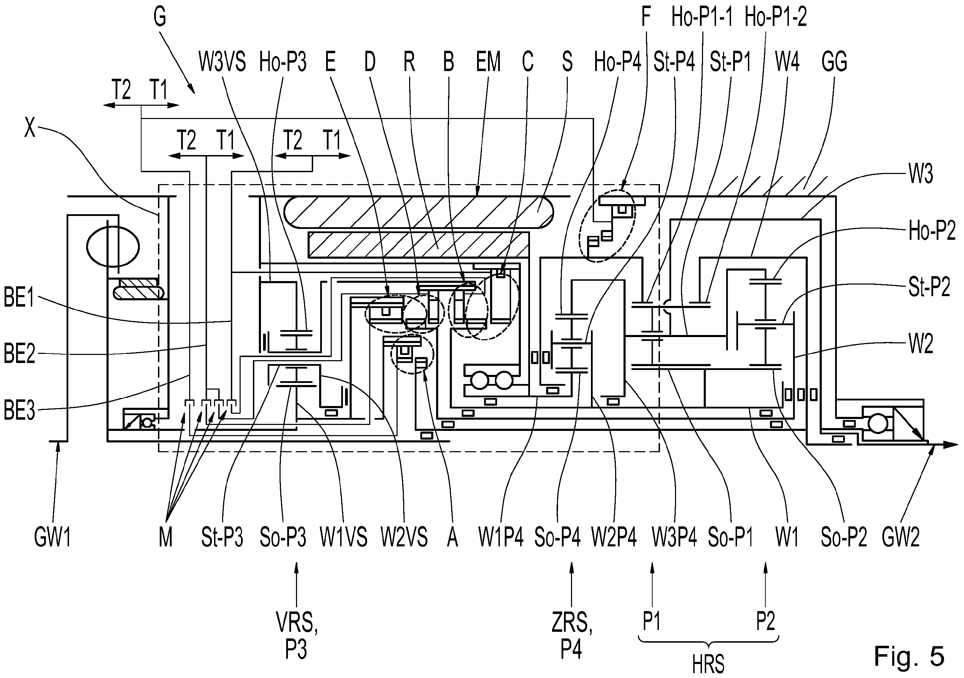

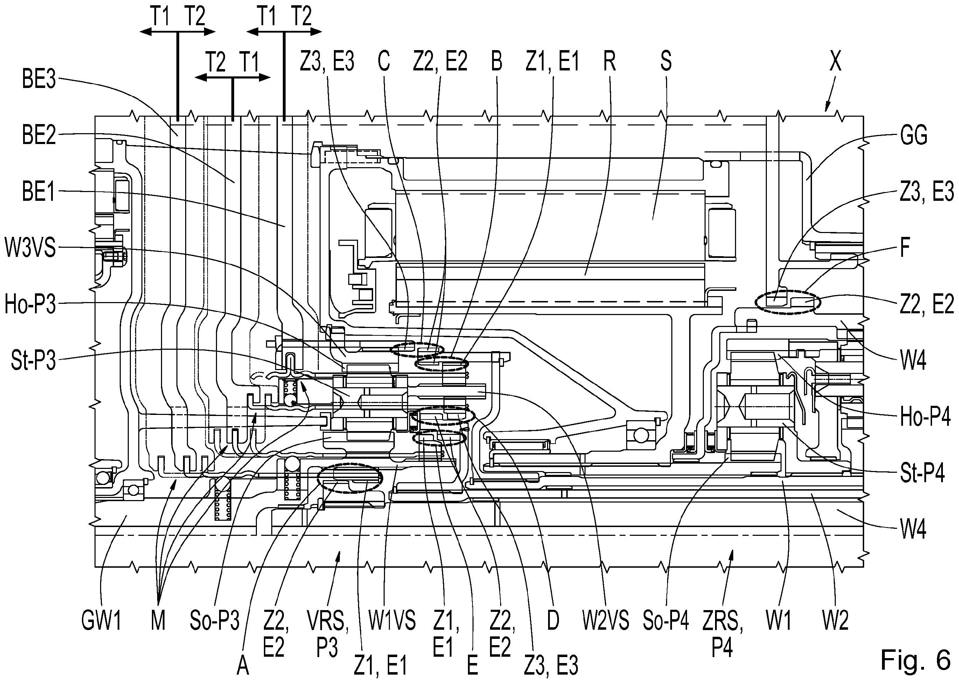

Fig. 5 zeigt eine schematische Ansicht eines beispielhaften Getriebes G mit mehreren Schaltvorrichtungen. Fig. 6 zeigt den in Fig. 5 als X gekennzeichneten Ausschnitt des Getriebes G in einer Schnittansicht. Das Getriebe G weist einen Vorschaltradsatz VRS, einen Zusatzradsatz ZRS und einen Hauptradsatz HRS, eine Getriebe-Eingangswelle GW1 und eine Getriebe-Ausgangswelle GW2 auf. Der Vorschaltradsatz VRS weist einen Planetenradsatz P3 auf und der Zusatzradsatz ZRS weist einen Planetenradsatz P4 auf, während der Hauptradsatz HRS einen ersten Planetenradsatz P1 und einen zweiten Planetenradsatz P2 aufweist. Sämtliche Planetenradsätze P1, P2, P3, P4 sind als Minus-Radsätze ausgebildet.

Die Getriebe-Eingangswelle GW1 ist mit einem Sonnenrad So-P3 des ersten Planetenradsatzes P3 des Vorschaltradsatzes VRS verbunden. Ein Hohlrad Ho-P3 des Planetenradsatzes P3 des Vorschaltradsatzes VRS ist drehfest mit dem Getriebegehäuse GG des Getriebes G, oder mit einem anderen drehfest fixierten Bauelement des Getriebes G verbunden ist. Das Sonnenrad So-P3 des Planetenradsatzes P3 des Vorschaltradsatzes VRS ist Bestandteil einer ersten Welle W1VS des Vorschaltradsatzes VRS. Ein Steg St-P3 des Planetenradsatzes P3 des Vorschaltradsatzes VRS ist Bestandteil einer zweiten Welle W2VS des Vorschaltradsatzes VRS. Jenes Bauelement, an dem sich das Hohlrad Ho-P3 des Planetenradsatzes P3 des Vorschaltradsatzes VRS abstützt, wird im Folgenden als dritte Welle W3VS des Vorschaltradsatzes VRS bezeichnet.

Die Sonnenräder So-P1, So-P2 des ersten und zweiten Planetenradsatzes P1, P2 des Hauptradsatzes HRS sind miteinander verbunden und sind Bestandteile einer ersten Welle W1 des Hauptradsatzes HRS. Der Steg St-P1 des ersten Planetenradsatzes P1 des Hauptradsatzes HRS ist mit dem Hohlrad Ho-P2 des zweiten Planetenradsatzes P2 des Hauptradsatzes HRS verbunden und ist derart Bestandteil einer dritten Welle W3 des Hauptradsatzes HRS. Das Hohlrad Ho-P1 des ersten Planetenradsatzes P1 des Hauptradsatzes HRS ist zweiteilig ausgeführt, und weist somit ein erstes Segment Ho-P1-1 und ein zweites Segment Ho-P1-2 auf. Beide Segmente Ho-P1-1, Ho-P1-2 sind Bestandteil einer vierten Welle W4 des Hauptradsatzes HRS. Zwischen den beiden Segmenten Ho-P1-1, Ho-P1-2 des Hohlrads Ho-P1 verläuft ein Abschnitt der dritten Welle W3 des Hauptradsatzes HRS und führt so zur Getriebe-Ausgangswelle GW2, welche in der dargestellten Ausführungsform koaxial zur Getriebe-Eingangswelle GW1 ist. Der Steg St-P2 des zweiten Planetenradsatzes P2 des Hauptradsatzes HRS ist Bestandteil einer zweiten Welle W2 des Hauptradsatzes HRS.

Das Getriebe G weist eine elektrische Maschine EM auf, wobei ein Stator S drehfest mit dem Getriebegehäuse GG des Getriebes G oder mit einem anderen drehfesten Bauelement des Getriebes G verbunden ist, sodass der Stator S keine Drehzahl annehmen kann. Ein drehbar gelagerter Rotor R ist mit einem Sonnenrad So-P4 des Planetenradsatzes P4 des Zusatzradsatzes ZRS verbunden. Das Sonnenrad So-P4 des Planetenradsatzes P4 des Zusatzradsatzes ZRS ist dabei Bestandteil einer ersten Welle W1P4 des Zusatzradsatzes ZRS. Ein Steg St-P4 des Planetenradsatzes P4 des Zusatzradsatzes ZRS ist Bestandteil einer zweiten Welle W2P4 des Zusatzradsatzes ZRS und ist mit der ersten Welle W1 des Hauptradsatzes HRS verbunden. Ein Hohlrad Ho-P4 des Planetenradsatzes P4 des Zusatzradsatzes ZRS ist Bestandteil einer dritten Welle W3P4 des Zusatzradsatzes ZRS und ist mit der dritten Welle W3 des Hauptradsatzes HRS verbunden.

Der ersten Welle W1 des Hauptradsatzes HRS sind ein erstes Schaltelement B und ein zweites Schaltelement C zugeordnet. Durch das erste Schaltelement B ist die erste Welle W1 des Hauptradsatzes HRS mit der zweiten Welle W2VS des Vorschaltradsatzes VRS verbindbar. Durch das zweite Schaltelement C ist die erste Welle W1 des Hauptradsatzes HRS drehfest festsetzbar. Der zweiten Welle W2 des Hauptradsatzes HRS sind ebenfalls ein erstes Schaltelement E und ein zweites Schaltelement D zugeordnet. Durch das erste Schaltelement E ist die zweite Welle W2 des Hauptradsatzes HRS mit der ersten Welle W1VS des Vorschaltradsatzes VRS verbindbar. Durch das zweite Schaltelement D ist die zweite Welle W2 des Hauptradsatzes HRS mit der zweiten Welle W2VS des Vorschaltradsatzes VRS verbindbar. Der vierten Welle W4 des Hauptradsatzes HRS sind ebenso ein erstes Schaltelement A und ein zweites Schaltelement F zugeordnet. Durch das erste Schaltelement A ist die vierte Welle W4 des Hauptradsatzes HRS mit der ersten Welle W1VS des Vorschaltradsatzes VRS verbindbar. Durch das zweite Schaltelement F ist die vierte Welle W4 des Hauptradsatzes HRS drehfest festsetzbar.

Das erste und zweite Schaltelement B, C, welche der ersten Welle W1 des Hauptradsatzes HRS zugeordnet sind, sind durch Längsverschiebung eines ersten Betätigungselements BE1 entlang einer ersten Verschieberichtung T1, bzw. einer zweiten Verschieberichtung T2 betätigbar. Dazu ist an einem Ende der ersten Welle W1 des Hauptradsatzes HRS, welches radial innerhalb des Rotors R angeordnet ist, eine Mitnahmeverzahnung Z2 ausgebildet. Die erste Welle W1 des Hauptradsatzes HRS ist durch eine geeignete Lagerung axial fixiert, und bildet so das zweite Element E2 der Schaltvorrichtung für das erste und zweite Schaltelement B, C. An einem Ende der zweiten Welle W2VS des Vorschaltradsatzes VRS ist ein Element angeordnet, welches axial verschiebbar und drehfest mit der zweiten Welle W2VS des Vorschaltradsatzes VRS verbunden ist. Dieses Element weist an einem Ende eine Mitnahmeverzahnung Z1 auf, und bildet derart das erste Element E1 der Schaltvorrichtung. Die Mitnahmeverzahnungen Z1 und Z2 bilden das erste Schaltelement B. Auf einem mit dem Gehäuse GG des Getriebes G verbundenen Bauelement ist ein Element axial verschiebbar gelagert. Dieses Element weist an einem Ende eine Mitnahmeverzahnung Z3 auf, und bildet derart das dritte Element E3 der Schaltvorrichtung. Die Mitnahmeverzahnungen Z2 und Z3 bilden das zweite Schaltelement C. Das erste und dritte Element E1, E3 sind mit dem ersten Betätigungselement BE1 gekoppelt. In der Wirkverbindung zwischen dem ersten Betätigungselement BE1 und dem ersten Element E1 ist eine Schaltmuffe M angeordnet, durch die der Drehzahlunterschied zwischen dem ersten Betätigungselement BE1 und dem Steg St-P3 des Planetenradsatzes P3 des Vorschaltradsatzes VRS ausgleichbar ist. Das erste Element E1 der Schaltvorrichtung erstreckt sich dabei durch den Steg St-P3 des Planetenradsatzes P3 des Vorschaltradsatzes VRS hindurch.

Das erste und zweite Schaltelement E, D, welche der zweiten Welle W2 des Hauptradsatzes HRS zugeordnet sind, sind durch Längsverschiebung eines zweiten Betätigungselements BE2 entlang der ersten Verschieberichtung T1, bzw. der zweiten Verschieberichtung T2 betätigbar. Dazu ist an einem Ende der zweiten Welle W2 des Hauptradsatzes HRS, welches radial innerhalb des Rotors R angeordnet ist, eine Mitnahmeverzahnung Z2 ausgebildet. Die zweite Welle W2 des Hauptradsatzes HRS ist durch eine geeignete Lagerung axial fixiert, und bildet so das zweite Element E2 der Schaltvorrichtung für das erste und zweite Schaltelement E, D. An einem Ende der ersten Welle W1VS des Vorschaltradsatzes VRS ist ein Element angeordnet, welches axial verschiebbar und drehfest mit der ersten Welle W1VS des Vorschaltradsatzes VRS verbunden ist. Dieses Element weist an einem Ende eine Mitnahmeverzahnung Z1 auf, und bildet derart das erste Element E1 der Schaltvorrichtung. Die Mitnahmeverzahnungen Z1 und Z2 bilden das erste Schaltelement E. An einem Ende der zweiten Welle W2VS des Vorschaltradsatzes VRS ist ein Element angeordnet, welches axial verschiebbar und drehfest mit der zweiten Welle W2VS des Vorschaltradsatzes VRS verbunden ist. Dieses Element weist an einem Ende eine Mitnahmeverzahnung Z3 auf, und bildet derart das dritte Element E3 der Schaltvorrichtung. Die Mitnahmeverzahnungen Z2 und Z3 bilden das zweite Schaltelement D. Das erste und dritte Element E1, E3 sind mit dem zweiten Betätigungselement BE2 gekoppelt. In der Wirkverbindung zwischen dem zweiten Betätigungselement BE2 und dem ersten Element E1 ist eine Schaltmuffe M angeordnet, durch die der Drehzahlunterschied zwischen dem zweiten Betätigungselement BE2 und dem Sonnenrad So-P3 des Planetenradsatzes P3 des Vorschaltradsatzes VRS ausgleichbar ist. In der Wirkverbindung zwischen dem zweiten Betätigungselement BE2 und dem dritten Element E3 ist eine Schaltmuffe M angeordnet, durch die der Drehzahlunterschied zwischen dem zweiten Betätigungselement BE2 und dem Steg St-P3 des Planetenradsatzes P3 des Vorschaltradsatzes VRS ausgleichbar ist.

Das erste und zweite Schaltelement A, F, welche der vierten Welle W4 des Hauptradsatzes HRS zugeordnet sind, sind durch Längsverschiebung eines dritten Betätigungselements BE3 entlang der ersten Verschieberichtung T1, bzw. der zweiten Verschieberichtung T2 betätigbar. Dazu ist an einem Ende der vierten Welle W4 des Hauptradsatzes HRS, welche mit dem zweiten Segment Ho-P1-2 des Hohlrads Ho-P1 des ersten Planetenradsatzes P1 des Hauptradsatzes HRS verbunden ist, eine Mitnahmeverzahnung Z2 ausgebildet. An einer anderen Stelle der vierten Welle W4 des Hauptradsatzes, welche mit dem ersten Segment Ho-P1-1 des Hohlrads Ho-P1 des ersten Planetenradsatzes P1 des Hauptradsatzes HRS verbunden ist, ist eine weitere Mitnahmeverzahnung Z2 ausgebildet. Die vierte Welle W4 des Hauptradsatzes HRS ist durch eine geeignete Lagerung axial fixiert, und bildet so das zweite Element E2 der Schaltvorrichtung für das erste und zweite Schaltelement A, F. An einem Ende der ersten Welle W1VS des Vorschaltradsatzes VRS ist ein Element angeordnet, welches axial verschiebbar und drehfest mit der ersten Welle W1VS des Vorschaltradsatzes VRS verbunden ist. Dieses Element weist an einem Ende eine Mitnahmeverzahnung Z1 auf, und bildet derart das erste Element E1 der Schaltvorrichtung. Die Mitnahmeverzahnungen Z1 und jene Mitnahmeverzahnung Z2 die mit dem zweiten Segment Ho-P1-2 verbunden ist bilden das erste Schaltelement A. Auf einem mit dem Gehäuse GG des Getriebes G verbundenen Bauelement ist ein Element axial verschiebbar gelagert. Dieses Element weist an einem Ende eine Mitnahmeverzahnung Z3 auf, und bildet derart das dritte Element E3 der Schaltvorrichtung. Die Mitnahmeverzahnung Z3 und jene Mitnahmeverzahnung Z2 die mit dem ersten Segment Ho-P1-1 verbunden ist bilden das zweite Schaltelement F. In der Wirkverbindung zwischen dem dritten Betätigungselement BE3 und dem ersten Element E1 ist eine Schaltmuffe M angeordnet, durch die der Drehzahlunterschied zwischen dem dritten Betätigungselement BE3 und dem Sonnenrad So-P3 des Planetenradsatzes P3 des Vorschaltradsatzes VRS ausgleichbar ist.

Fig. 6 zeigt einen Ausschnitt X einer Schnittdarstellung des Getriebes G mit mehreren Schaltvorrichtungen. Darin sind die Mitnahmeverzahnungen Z1, Z2 für jedes der ersten Schaltelemente A, B, E und die Mitnahmeverzahnungen Z2, Z3 für jedes der zweiten Schaltelemente F, C, D detailliert dargestellt. Die verschiedenen Positionen der Betätigungselement BE1, BE, BE3 in den unterschiedlichen Schaltzuständen S1, S2, S3 sind angedeutet, wobei alle Schaltelemente A, B, C, D, E, F im dritten Schaltzustand S3 dargestellt sind. Die Koppelung des ersten und zweiten Schaltelements A, F, welche der vierten Welle W4 des Hauptradsatzes HRS zugeordnet sind, ist ebenfalls angedeutet. Im Gegensatz zur Ausgestaltung in Fig. 5 sind die den Betätigungselementen BE1, BE2, BE3 zugeordneten Verschieberichtungen T1, T2 nicht alle gleichsinnig.

### Bezugszeichen

- G: Getriebe
- GG: Gehäuse
- GW1: Getriebe-Eingangswelle
- GW2: Getriebe-Ausgangswelle
- HRS: Hauptradsatz
- ZRS: Zusatzradsatz
- VRS: Vorschaltradsatz
- EM: Elektrische Maschine
- R: Rotor der elektrischen Maschine
- S: Stator der elektrischen Maschine
- P: Planetenradsatz
- P1: Erster Planetenradsatz des Hauptradsatzes
- P2: Zweiter Planetenradsatz des Hauptradsatzes
- P3: Planetenradsatz des Vorschaltradsatzes
- P4: Planetenradsatz des Zusatzradsatzes
- W1: Erste Welle des Hauptradsatzes
- W2: Zweite Welle des Hauptradsatzes
- W3: Dritte Welle des Hauptradsatzes
- W4: Vierte Welle des Hauptradsatzes
- W1VS: Erste Welle des Vorschaltradsatzes
- W2VS: Zweite Welle des Vorschaltradsatzes
- W3VS: Dritte Welle des Vorschaltradsatzes
- W1P4: Erste Welle des Zusatzradsatzes
- W2P4: Zweite Welle des Zusatzradsatzes
- W3P4: Dritte Welle des Zusatzradsatzes
- A, B, E: Erstes Schaltelement
- F, C, D: Zweites Schaltelement
- SE1: Erstes Schaltelement
- SE2: Zweites Schaltelement
- So: Sonnenrad
- So-1: Erstes Segment des Sonnenrads
- So-2: Zweites Segment des Sonnenrads
- St: Steg
- Ho: Hohlrad
- Ho-1: Erstes Segment des Hohlrads
- Ho-2: Zweites Segment des Hohlrads
- So-P1: Sonnenrad des ersten Planetenradsatzes des Hauptradsatzes
- St-P1: Steg des ersten Planetenradsatzes des Hauptradsatzes
- Ho-P1: Hohlrad des ersten Planetenradsatzes des Hauptradsatzes
- Ho-P1-1: Erstes Segment des Hohlrads des ersten Planetenradsatzes des Hauptradsatzes
- Ho-P1-2: Zweites Segment des Hohlrads des ersten Planetenradsatzes des Hauptradsatzes
- So-P2: Sonnenrad des zweiten Planetenradsatzes des Hauptradsatzes
- St-P2: Steg des zweiten Planetenradsatzes des Hauptradsatzes
- Ho-P2: Hohlrad des zweiten Planetenradsatzes des Hauptradsatzes
- So-P3: Sonnenrad des ersten Planetenradsatzes des Vorschaltradsatzes
- St-P3: Steg des ersten Planetenradsatzes des Vorschaltradsatzes
- Ho-P3: Hohlrad des zweiten Planetenradsatzes des Vorschaltradsatzes
- So-P4: Sonnenrad des Planetenradsatzes des Zusatzradsatzes
- St-P4: Steg des Planetenradsatzes des Zusatzradsatzes
- E1: Erstes Element
- E2: Zweites Element
- E3: Drittes Element
- Z1: Mitnahmeverzahnung
- Z2: Mitnahmeverzahnung
- Z3: Mitnahmeverzahnung
- BE: Betätigungselement
- BE1: Erstes Betätigungselement
- BE2: Zweites Betätigungselement
- BE3: Drittes Betätigungselement
- T1: Erste Verschieberichtung
- T2: Zweite Verschieberichtung
- M: Überbrückungsvorrichtung
- M1: Erste Überbrückungsvorrichtung
- M2: Zweite Überbrückungsvorrichtung
- S1: Erster Schaltzustand
- S2: Zweiter Schaltzustand
- S3: Dritter Schaltzustand

## Patentansprüche

1. Anordnung, enthaltend einen Planetenradsatz (P) und eine Vorrichtung zum Schalten eines ersten Schaltelements (SE1, A, B, E) und eines zweiten Schaltelements (SE2, F, C, D), wobei durch das erste Schaltelement (SE1, A, B, E) eine drehfeste formschlüssige Verbindung zwischen einem ersten Element (E1) und einem zweiten Element (E2) herstellbar ist, und wobei durch das zweite Schaltelement (SE2, F, C, D) eine drehfeste formschlüssige Verbindung zwischen dem zweiten Element (E2) und einem dritten Element (E3) herstellbar ist, wobei die Betätigung des ersten Schaltelements (SE1, A, B, E) durch Längsverschiebung eines gemeinsamen Betätigungselements (BE, BE1, BE2, BE3) entlang einer ersten Verschieberichtung (T1) erfolgt, wobei die Betätigung des zweiten Schaltelements (SE2, F, E, D) durch Längsverschiebung des gemeinsamen Betätigungselements (BE, BE1, BE2, BE3) entlang einer der ersten Verschieberichtung (T1) entgegengesetzten zweiten Verschieberichtung (T2) erfolgt, wobei in einem ersten Schaltzustand (S1) das erste Schaltelement (SE1, A, B, E) geschlossen ist und das zweite Schaltelement (SE2, F, C, D) geöffnet ist, wobei in einem zweiten Schaltzustand (S2) das erste Schaltelement (SE1, A, B, E) geöffnet ist und das zweite Schaltelement (SE2, F, C, D) geschlossen ist, und wobei das erste Element (E1) und das dritte Element (E3) miteinander gekoppelt sind, sodass eine Verschiebung des ersten Elements (E1) durch das gemeinsame Betätigungselement (BE, BE1, BE2, BE3) in einer der beiden Verschieberichtungen (T1, T2) zu einer gleichgerichteten Verschiebung des dritten Elements (E3) führt und umgekehrt, und wobei das zweite Element (E2) in beiden Verschieberichtungen (T1, T2) lagefixiert ist, **dadurch gekennzeichnet, dass** entweder
- das erste Element (E1) drehfest mit einem Steg (St) des Planetenradsatzes (P) verbunden ist und das dritte Element (E3) drehfest mit einem Sonnenrad (So) oder einem Hohlrad (Ho) des Planetenradsatzes (P) verbunden ist, wobei das gemeinsame Betätigungselement (BE1 / BE2 / BE3) auf einer ersten Seite des Planetenradsatzes (P) angeordnet ist und das zweite Element (E2) auf einer der ersten Seite gegenüberliegenden zweiten Seite des Planetenradsatzes (P) angeordnet ist, oder
- das zweite Element (E2) drehfest mit einem Hohlrad (Ho) des Planetenradsatzes (P) verbunden ist, wobei das Hohlrad (Ho) ein erstes Segment (Ho-1) und ein zweites Segment (Ho-2) aufweist welche voneinander getrennt sind, wobei durch das erste Element (E1) eine drehfeste Verbindung zum ersten Segment (Ho-1) oder einem damit verbundenen Wellenabschnitt herstellbar ist und durch das dritte Element (E3) eine drehfeste Verbindung zum zweiten Segment (Ho-2) oder einem damit verbundenen Wellenabschnitt herstellbar ist, oder
- das zweite Element (E2) drehfest mit einem Sonnenrad (So) des Planetenradsatzes (P) verbunden ist, wobei das Sonnenrad (So) ein erstes Segment (So-1) und ein zweites Segment (So-2) aufweist welche voneinander getrennt sind,
wobei durch das erste Element (E1) eine drehfeste Verbindung zum ersten Segment (So-1) oder einem damit verbundenen Wellenabschnitt herstellbar ist und durch das dritte Element (E3) eine drehfeste Verbindung zum zweiten Segment (So-2) oder einem damit verbundenen Wellenabschnitt herstellbar ist.

2. Anordnung nach Anspruch 1, wobei das erste Element (E1) drehfest mit einem Steg (St) des Planetenradsatzes (P) verbunden ist und das dritte Element (E3) drehfest mit einem Sonnenrad (So) oder einem Hohlrad (Ho) des Planetenradsatzes (P) verbunden ist, wobei das gemeinsame Betätigungselement (BE1 / BE2 / BE3) auf einer ersten Seite des Planetenradsatzes (P) angeordnet ist und das zweite Element (E2) auf einer der ersten Seite gegenüberliegenden zweiten Seite des Planetenradsatzes (P) angeordnet ist, **dadurch gekennzeichnet, dass** das erste Element (E1) gegenüber dem Steg (St) des Planetenradsatzes (P) axial verschiebbar ist.

3. Anordnung nach Anspruch 2, **dadurch gekennzeichnet, dass** das dritte Element (E3) drehfest mit dem Sonnenrad (So) des Planetenradsatzes (P) verbunden ist und gegenüber dem Sonnenrad (So) axial verschiebbar ist, oder das dritte Element (E3) drehfest mit dem Hohlrad (Ho) des Planetenradsatzes (P) verbunden ist und gegenüber dem Hohlrad (Ho) axial verschiebbar ist.

4. Anordnung nach einem der vorangehenden Ansprüche, **dadurch gekennzeichnet, dass** in der Wirkverbindung zwischen dem gemeinsamen Betätigungselement (BE1, BE1, BE2, BE3) und zumindest einem des ersten und dritten Elements (E1, E3) eine Überbrückungsvorrichtung (M, M1, M2) angeordnet ist, wodurch ein Drehzahlunterschied zwischen dem gemeinsamen Betätigungselement (BE, BE1, BE2, BE3) und dem ersten bzw. dritten Element (E1, E3) ausgleichbar ist.

5. Anordnung nach Anspruch 4, **dadurch gekennzeichnet, dass** in der Wirkverbindung zwischen dem gemeinsamen Betätigungselement (BE, BE1, BE2, BE3) und dem ersten Element (E1) eine erste Überbrückungsvorrichtung (M1) angeordnet ist und in der Wirkverbindung zwischen dem gemeinsamen Betätigungselement (BE, BE1, BE2, BE3) und dem dritten Element (E3) eine zweite Überbrückungsvorrichtung (M2) angeordnet ist, wobei die erste und zweite Überbrückungsvorrichtung (M1, M2) parallel zueinander angeordnet sind.

6. Anordnung nach einem der vorangehenden Ansprüche, **dadurch gekennzeichnet, dass** in einem dritten Schaltzustand (S3) das erste Schaltelement (SE1, A, B ,E) und das zweite Schaltelement (SE2, F, C, D) geöffnet sind.

7. Getriebe (G) für ein Kraftfahrzeug, umfassend zumindest eine Anonrdnung nach einem der Ansprüche 1 bis 6.

## Claims

1. Arrangement containing a planetary gear set (P) and a device for shifting a first shift element (SE1, A, B, E) and a second shift element (SE2, F, C, D), wherein the first shift element (SE1, A, B, E) can bring about a rotationally fixed, positively locking connection between a first element (E1) and a second element (E2), and wherein the second shift element (SE2, F, C, D) can bring about a rotationally fixed, positively locking connection between the second element (E2) and a third element (E3), wherein the first shift element (SE1, A, B, E) is activated by longitudinally displacing a common activation element (BE, BE1, BE2, BE3) in a first displacement direction (T1), wherein the second shift element (SE2, F, E, D) is activated by longitudinally displacing the common activation element (BE, BE1, BE2, BE3) in a second displacement direction (T2) opposite the first displacement direction (T1), wherein in a first shifted state (S1) the first shift element (SE1, A, B, E) is closed and the second shift element (SE2, F, C, D) is opened, wherein in a second shifted state (S2) the first shift element (SE1, A, B, E) is opened and the second shift element (SE2, F, C, D) is closed, and wherein the first element (E1) and the third element (E3) are coupled to one another so that displacement of the first element (E1) by the common activation element (BE, BE1, BE2, BE3) in one of the two displacement directions (T1, T2) causes the third element (E3) to be displaced in the same direction, and vice versa, and wherein the second element (E2) is positionally fixed in both displacement directions (T1, T2), **characterized in that** either
- the first element (E1) is connected in a rotationally fixed fashion to a web (St) of the planetary gear set (P), and the second element (E3) is connected in a rotationally fixed fashion to a sun gear (So) or a ring gear (Ho) of the planetary gear set (P), wherein the common activation element (BE1/BE2/BE3) is arranged on a first side of the planetary gear set (P), and the second element (E2) is arranged on a second side, opposite the first side, of the planetary gear set (P), or
- the second element (E2) is connected in a rotationally fixed fashion to a ring gear (Ho) of the planetary gear set (P), wherein the ring gear (Ho) has a first segment (Ho-1) and a second segment (Ho-2) which are separate from one another, wherein a rotationally fixed connection to the first segment (Ho-1) or a shaft segment connected thereto can be brought about by means of the first element (E1), and a rotationally fixed connection to the second segment (Ho-2) or to a shaft section connected thereto can be brought about by means of the third element (E3), or
- the second element (E2) is connected in a rotationally fixed fashion to a sun gear (So) of the planetary gear set (P), wherein the sun gear (So) has a first segment (So-1) and a second segment (So-2) which are separate from one another, wherein a rotationally fixed connection to the first segment (So-1) or a shaft section connected thereto can be brought about by means of the first element (E1), and a rotationally fixed connection to the second segment (So-2) or to a shaft section connected thereto can be brought about by means of the third element (E3).

2. Arrangement according to Claim 1, wherein the first element (E1) is connected in a rotationally fixed fashion to a web (St) of the planetary gear set (P), and the third element (E3) is connected in a rotationally fixed fashion to a sun gear (So) or to a ring gear (Ho) of the planetary gear set (P), wherein the common activation element (BE1/BE2/BE3) is arranged on a first side of the planetary gear set (P), and the second element (E2) is arranged on a second side, lying opposite the first side, of the planetary gear set (P), **characterized in that** the first element (E1) can be displaced axially with respect to the web (St) of the planetary gear set (P) .

3. Arrangement according to Claim 2, **characterized in that** the third element (E3) is connected in a rotationally fixed fashion to the sun gear (So) of the planetary gear set (P) and can be displaced axially with respect to the sun gear (So), or the third element (E3) is connected in a rotationally fixed fashion to the ring gear (Ho) of the planetary gear set (P) and can be displaced axially with respect to the ring gear (Ho).

4. Arrangement according to one of the preceding claims, **characterized in that** a bypass device (M, M1, M2) is arranged in the operative connection between the common activation element (BE1, BE1, BE2, BE3) and at least one of the first element (E1) and third element (E3), as a result of which a difference in rotational speed between the common activation element (BE, BE1, BE2, BE3) and first element (E1) or third element (E3) can be compensated.

5. Arrangement according to Claim 4, **characterized in that** a first bypass device (M1) is arranged in the operative connection between the common activation element (BE, BE1, BE2, BE3) and the first element (E1), and a second bypass device (M2) is arranged in the operative connection between the common activation element (BE, BE1, BE2, BE3) and the third element (E3), wherein the first and second bypass devices (M1, M2) are arranged parallel to one another.

6. Arrangement according to one of the preceding claims, **characterized in that** in a third shifted state (S3) the first shift element (SE1, A, B, E) and the second shift element (SE2, F, C, D) are opened.

7. Transmission (G) for a motor vehicle, comprising at least one arrangement according to one of Claims 1 to 6.

## Revendications

1. Agencement contenant un train épicycloïdal (P) et un dispositif pour commuter un premier élément de commutation (SE1, A, B, E) et un deuxième élément de commutation (SE2, F, C, D), une connexion par engagement par correspondance de formes solidaire en rotation entre un premier élément (E1) et un deuxième élément (E2) pouvant être établie par le premier élément de commutation (SE1, A, B, E), et une connexion par engagement par correspondance de formes solidaire en rotation entre le deuxième élément (E2) et un troisième élément (E3) pouvant être établie par le deuxième élément de commutation (SE2, F, C, D), l'actionnement du premier élément de commutation (SE1, A, B, E) s'effectuant par déplacement longitudinal d'un élément d'actionnement commun (BE, BE1, BE2, BE3) le long d'une première direction de déplacement (T1), l'actionnement du deuxième élément de commutation (SE2, F, E, D) s'effectuant par déplacement longitudinal de l'élément d'actionnement commun (BE, BE1, BE2, BE3) le long d'une deuxième direction de déplacement (T2) opposée à la première direction de déplacement (T1), dans un premier état de commutation (S1), le premier élément de commutation (SE1, A, B, E) étant fermé et le deuxième élément de commutation (SE2, F, C, D) étant ouvert, dans un deuxième état de commutation (S2), le premier élément de commutation (SE1, A, B, E) étant ouvert et le deuxième élément de commutation (SE2, F, C, D) étant fermé, et le premier élément (E1) et le troisième élément (E3) étant accouplés l'un à l'autre, de telle sorte qu'un déplacement du premier élément (E1) par l'élément d'actionnement commun (BE, BE1, BE2, BE3) dans l'une des deux directions de déplacement (T1, T2) conduise à un déplacement orienté dans le même sens du troisième élément (E3) et inversement, et le deuxième élément (E2) étant fixé en position dans les deux directions de déplacement (T1, T2),
**caractérisé en ce que**
- soit le premier élément (E1) est connecté de manière solidaire en rotation à un porte-satellites (St) du train épicycloïdal (P) et le troisième élément (E3) est connecté de manière solidaire en rotation à une roue solaire (So) ou à une couronne dentée (Ho) du train épicycloïdal (P), l'élément d'actionnement commun (BE1/BE2/BE3) étant disposé sur un premier côté du train épicycloïdal (P) et le deuxième élément (E2) étant disposé sur un deuxième côté du train épicycloïdal (P) opposé au premier côté,
- soit le deuxième élément (E2) est connecté de manière solidaire en rotation à une couronne dentée (Ho) du train épicycloïdal (P), la couronne dentée (Ho) présentant un premier segment (Ho-1) et un deuxième segment (Ho-2) qui sont séparés l'un de l'autre, une connexion solidaire en rotation avec le premier segment (Ho-1) ou avec une portion d'arbre connectée à celui-ci pouvant être établie par le premier élément (E1) et une connexion solidaire en rotation avec le deuxième segment (Ho-2) ou avec une portion d'arbre connectée à celui-ci pouvant être établie par le troisième élément (E3),
- soit le deuxième élément (E2) est connecté de manière solidaire en rotation à une roue solaire (So) du train épicycloïdal (P), la roue solaire (So) présentant un premier segment (So-1) et un deuxième segment (So-2) qui sont séparés l'un de l'autre, une connexion solidaire en rotation avec le premier segment (So-1) ou avec une portion d'arbre connectée à celui-ci pouvant être établie par le premier élément (E1) et une connexion solidaire en rotation avec le deuxième segment (So-2) ou avec une portion d'arbre connectée à celui-ci pouvant être établie par le troisième élément (E3) .

2. Agencement selon la revendication 1, dans lequel le premier élément (E1) est connecté de manière solidaire en rotation à un porte-satellites (St) du train épicycloïdal (P) et le troisième élément (E3) est connecté de manière solidaire en rotation à une roue solaire (So) ou à une couronne dentée (Ho) du train épicycloïdal (P), l'élément d'actionnement commun (BE1/BE2/BE3) étant disposé sur un premier côté du train épicycloïdal (P) et le deuxième élément (E2) étant disposé sur un deuxième côté du train épicycloïdal (P) opposé au premier côté, **caractérisé en ce que** le premier élément (E1) peut être déplacé axialement par rapport au porte-satellites (St) du train épicycloïdal (P).

3. Agencement selon la revendication 2, **caractérisé en ce que** le troisième élément (E3) est connecté de manière solidaire en rotation à la roue solaire (So) du train épicycloïdal (P) et peut être déplacé axialement par rapport à la roue solaire (So), ou le troisième élément (E3) est connecté de manière solidaire en rotation à la couronne dentée (Ho) du train épicycloïdal (P) et peut être déplacé axialement par rapport à la couronne dentée (Ho).

4. Agencement selon l'une quelconque des revendications précédentes, **caractérisé en ce que** dans la liaison fonctionnelle entre l'élément d'actionnement commun (BE1, BE1, BE2, BE3) et au moins l'un du premier et du troisième élément (E1, E3), est disposé un dispositif de pontage (M, M1, M2), de sorte qu'une différence de vitesses de rotation entre l'élément d'actionnement commun (BE, BE1, BE2, BE3) et le premier, respectivement le troisième, élément (E1, E3) puisse être compensée.

5. Agencement selon la revendication 4, **caractérisé en ce que** dans la liaison fonctionnelle entre l'élément d'actionnement commun (BE, BE1, BE2, BE3) et le premier élément (E1) est disposé un premier dispositif de pontage (M1) et dans la liaison fonctionnelle entre l'élément d'actionnement commun (BE, BE1, BE2, BE3) et le troisième élément (E3) est disposé un deuxième dispositif de pontage (M2), le premier et le deuxième dispositif de pontage (M1, M2) étant disposés parallèlement l'un à l'autre.

6. Agencement selon l'une quelconque des revendications précédentes, **caractérisé en ce que** dans un troisième état de commutation (S3), le premier élément de commutation (SE1, A, B, E) et le deuxième élément de commutation (SE2, F, C, D) sont ouverts.

7. Boîte de vitesses (G) pour un véhicule automobile, comprenant au moins un agencement selon l'une quelconque des revendications 1 à 6.
